# NEUE EUROPÄISCHE PATENTSCHRIFT

(11) **EP 0 188 238 B2**
(45) Veröffentlichungstag und Bekanntmachung des Hinweises auf die Entscheidung über den Einspruch: **30.03.1994**
(45) Hinweis auf die Patenterteilung: 11.10.1989
(21) Anmeldenummer: 86100250.9
(22) Anmeldetag: 10.01.1986
(51) Int. Cl.: D21G 1/02, F16C 13/00

(54) **Beheizbare Kalanderwalze mit einem einen Strömungsspalt bildenden Verdrängerkörper**
Heated calander roller comprising a stationary core and a clearance intermediate said roller and said core
Rouleau chauffé pour calandre comprenant un noyau fixe laissant un écartement par rapport au cylindre

(30) Priorität: 16.01.1985 DE 8500950 U
(43) Veröffentlichungstag der Anmeldung: 23.07.1986
(73) Patentinhaber: Walzen-Irle GmbH, D-57250 Netphen (DE)
(72) Erfinder: Schönemann, Joachim, D-5902 Netphen 3 (DE)
(74) Vertreter: Grosse, Dietrich, Dipl.-Ing.

(56) Entgegenhaltungen:
- AT-B- 275 310
- AT-B- 283 102
- DE-A- 3 014 891
- Sonderdruck, Firmenzeitschrift der Fa. Eduard Küsters Maschinenfabrik, Die"Schwimmende Walze" als Druckelement an Walzmaschinen in der Zellulose- und Papierindustrie, Wochenblatt für Papierfabrikation, 89. Jahrgang, Aug. 1961, Nr. 16
- Firmenzeitschrift der Fa. E. Küsters Maschinenfabrik "Information für die Zellulose-, Karton- und Papierindustrie (1. Folge) "Die schwimmende Walze Küsters"
- Firmenzeitschrift der Fa. E. Küsters Maschinenfabrik "information für die Zellulose-, Karton und Papierindustrie (1. Folge), "Die Vario Schwimmende Walze Küsters"
- "Die Schwimmende Walze als neues Maschinenelement für Walzmaschinen", Melliand Textilberichte, Vol. 39, Nr. 1, 1958, Seiten 88-90

## Beschreibung

Die Erfindung betrifft eine beheizbare Kalanderwalze mit einem hohlzylindrischen Walzenkörper und einem in diesem angeordneten, mit dessen Innenmantel einen ein thermisches Übertragungsmedium führenden Spalt einschließenden Verdrängungskörper, der als durchgehende Achse ausgebildet ist, die in von schwimmenden Walzen bekannter Weise beidseitig gegen den gebildeten Spalt abgedichtete, den Walzenkörper stützende Lager aufweist, und dessen Enden axiale oder achsparallele Sackbohrungen aufweisen, die mit den Zu- und Abflußanschlüssen für das thermische Übertragungsmedium versehen sind, und in deren Endbereiche in im wesentlichen radial geführte Querbohrungen münden.

Beheizte, mit einem Verdrängungskörper nach der DE-A 30 14 891 versehene Kalanderwalzen werden insbesondere in der Papier-, in der Gummi- sowie der Kunststoffindustrie verwendet. Bei der Anwendung solcher beheizbaren, mit Verdrängungskörpern ausgestatteten Walzen hat es sich als nachteilig erwiesen, daß schon die Zentrierung und Fixierung üblicher, aus Blech erstellter Verdrängungskörper innerhalb des hohlzylindrischen Walzenkörpers auf Schwierigkeiten stoßen kann, und bei hohen Drehzahlen, insbesondere bei hohen, bspw. beim spontanen Stillsetzen erreichten, Beschleunigungen ergeben sich Kräfte, denen derartige Verdrängungskörper nicht immer gewachsen sind, so daß sie sich erheblich verformen oder gar reißen können und damit aufwendige Reparaturen erforderlich werden.

Der meist sehr geringen Stärke der zu verarbeitenden Bahnen wegen sind Kalanderwalzen innerhalb enger Toleranzen so herzustellen, daß sich auch unter der Betriebslast entlang der wirksamen Mantellinien gleiche Spaltstärken und Linienpressungen ergeben. Mit einer Bombierung versehene Walzen erfüllen die vorgegebenen Anforderungen nur beim Einhalten der vorgegebenen Parameter. Der durch die jeweils vorliegenden Bedingungen sich einstellenden Walzendurchbiegung kann durch die Aufbringung von Biegemomenten auf die Walzenzapfen entgegengewirkt werden; die durch gleichförmige Belastung der Mantellinie sich ergebende Durchbiegung läßt sich jedoch der sich ergebenden unterschiedlichen Biegekurven wegen durch solche Biegevorrichtungen nicht über die gesamte Bahnenlänge gleichförmig kompensieren. Man hat deshalb zum Ausgleich in insbesondere Papier- und Textilkalandern eine oder zwei Anordnungen nach dem "Wochenblatt für Papierfabrikation", Güntter-Staib Verlag, Biberach, 1961, Seiten 773 bis 777 verwendet, die als "schwimmende Walzen" bezeichnet werden, und bei denen eine feststehende Achse über Lager einen hohlzylindrischen Walzenkörper zentriert, der durch innerhalb eines den wirksamen Spalt unterfangenden Mantelsektors durch ein Druckmedium abgestützt wird. Die hierbei auftretenden Leckverluste können bewußt erhöht werden, um bspw. bei beheizten Kalanderwalzen einen die Wärmeübertragung sichernden Umsatz des auch die Wärme übertragenden Druckmediums zu erreichen. Als nachteilig erweist es sich jedoch hierbei, daß das vorgewählte Druck- sowie Wärmeübertragungsmedium mit hohem Druck zu fördern ist. Zu beachten ist weiterhin, daß die Achsen solcher schwimmenden Walzen eine geringere Stützweite aufweisen als die bisher üblicher Walzen.

Es hat sich weiterhin gezeigt, daß bei der Herstellung bspw. von Papier nicht nur identische Durchbiegungslinien der zusammenlaufenden Walzen erforderlich sind, die durch Bombierung oder Walzendurchbiegung erreichbar sind oder sich bei der Verwendung der sogenannten Ausgleichswalzen ergeben, wobei weitere Anpassungen der Durchbiegungslinien durch partielle Kühlung und/oder Aufheizung der Walzen und deren hierdurch bedingten thermischen Durchmesseränderungen verwendet werden können. So können bspw. zur Korrektur Kaltluft oder Heißluft bzw. Dampfdüsen eingesetzt werden, und auch eine partielle Induktionsheizung wurde durch die DE-A 27 50 047 vorgeschlagen.

Insbesondere bei der Herstellung von Papier hat es sich jedoch gezeigt, daß die erzielbare Glätte, der Glanz sowie die Bedruckbarkeit gesteigert werden können, wenn der Nip-Druck und/oder die Walzentemperatur erhöht werden, wobei die Temperaturerhöhung eine wesentlich höhere Steigerung ergibt als eine Erhöhung des Nip-Druckes. Es empfiehlt sich daher, die Walzen derart stark aufzuheizen, daß der Spielraum des thermischen Ausgleiches eingegrenzt wird.

Gleichzeitig hat sich aber noch gezeigt, daß bei üblichen Kalan-derwalzen der Randverschnitt der Papierbahnen unerwünscht hoch ausfällt. Die aus dem Stoffauflauf, der Siebpartie, der Pressen- und Trockenpartie resultierende Papierbahn weist im allgemeinen schon aus diesen herrührende Kalibrierungsfehler auf, und insbesondere durch die Trockenpartie sind die Ränder der Papierbahn stärker getrocknet als ihre feuchter gebliebenen zentralen Bereiche. Dies bedingt zwar, daß die Wärmeübertragung von der Walze an das Papier in den trockneren Randbereichen infolge deren niedriger Wärmeleitfähigkeit auch geringer ausfällt. Trotz der geringen aufgenommenen Wärme jedoch bleiben diese Randbereiche trockener und werden auf höhere Temperaturen aufgeheizt als die feuchteren und einen höheren Wärmeübergang ergebenden zentralen Bereiche, da die trockenen Randbereiche eine geringere spezifische Wärme zeigen als die feuchten zentralen Bereiche. Den von den Randbereichen der Papierbahn übergriffenen Zonen der Kalanderwalze wird jedenfalls ein geringerer Wärmestrom entzogen als ihren zentralen Zonen, so daß das thermisch Gleichgewicht der beheizten Kalanderwalze und damit deren Kontur gestört werden. Unterstützt wird dieser Vorgang noch durch den bei engerem Spalte erhöhten mechanischen Wärmeumsatz, der noch durch die üblicherweise stärkeren Randbereiche des Papieres zusätzlich gesteigert wird. Eine Bedampfung der Randbereiche der Papierbahn zur Erzielung einer gleichmäßigen Feuchte erweist sich als schwierig und aufwendig und bringt kaum die erforderliche Temperatur-Korrektur. Es wurde daher als wünschenswert erkannt, nach Möglichkeit eine Steuerbarkeit oder Regelbarkeit der von der beheizten Kalanderwalze auf die Papierbahn partiell übertragenen Wärme zu erreichen.

Die Erfindung geht daher von der Aufgabe aus, eine beheizbare Kalanderwalze der beschriebenen Gattung zu entwickeln, die bei guter, durch stabile Verdrängungskörper gesicherter definierter Beheizbarkeit mit geringer Förderhöhe des thermischen Übertragungsmediums sich in der Stützweite und im Lagerabstand üblichen Ausgleichswalzen, bspw. üblichen schwimmenden Walzen, anpassen läßt, und die eine Einstellung oder Regelung der Länge der beheizten Mantelabschnitte gestattet, um so auch Randbereiche geringer Feuchtigkeit entsprechend dem abgesenkten Wassergehalt geringer beheizen und den Randverschnitt der Papierbahnen senken zu können.

Gelöst wird diese Aufgabe, indem die Querbohrungen von den einander axial gegenüberliegenden Stirnseiten des zwischen der durchgehenden Achse und dem hohlzylindrischen Walzenkörper gebildeten Spaltes ausgehen, und indem die diese Stirnseiten des Spaltes abgrenzenden Dichtungen bzw. Dichtkörper einstellbar axial verschieblich sind. Hierdurch wird bei einer der der bekannten schwimmenden Walzen ähnlichen Konstruktion mit diesen entsprechenden Stützweiten und Lagerabständen ein das thermische Medium führender Spalt gebildet, der mit so geringem Querschnitt ausgeführt ist, daß eine definierte Führung des thermischen Mediums möglich wird und damit eine gleichmäßige Beheizung gesichert ist, deren effektive Breite jeweils durch Verschieben der Dichtungen bzw. der diese aufweisenden Dichtkörper einstellbar ist. Zwar haben, abweichend von den üblichen schwimmenden Walzen, die Lager die jeweiligen Stützkräfte der Walze aufzunehmen, da die kompensierende Druckflüssigkeit entfällt. Die stationäre Achse jedoch wirkt als stabiler Verdrängungskörper, der seiner stationären Anordnung wegen keinerlei Beshleunigungsbeanspruchungen unterliegt, und das Entfallen jeglicher Druckfunktionen für das thermische Medium erlaubt einen stabile Temperaturen sichernden hohen Durchsatz mit nur geringem Energiebedarf.

Die Wärmeübertragung läßt sich durch eine Turbulenz steigern, die durch in der Achse vorgesehene Längsnute und/oder durch in diese eingelegte Längsrippen bewirkt wird. Darüber hinaus kann die Achse mit einen Segmentspalt einengenden, an den Innenmantel des Walzenkörpers anschließenden, längsverlaufenden Begrenzungsleisten versehen sein, so daß auch durch Einschnürung des Querschnittes eine höhere Strömungsgeschwindigkeit des thermischen Mediums erreicht wird.

Die einstellbar verschieblichen, die Stirnseiten des Spaltes abgrenzenden Dichtungen gestatten, die jeweils vom thermischen Übertragungsmedium beaufschlagte Länge des Spaltes und damit die Länge des beheizten Mantelbereiches der Kalanderwalze einzustellen bzw. einzuregeln. Bewährt hat sich hierbei eine Bauweise, bei der den die Spalte begrenzenden, fest angeordneten Dichtungen einstellbar axial verschiebliche Füllkörper vorgeordnet sind, welche beim Vorschieben den dem Übertragungsmedium zur Verfügung stehenden Raum einzuschränken vermögen. Die Dichtungskörper bzw. diesen vorgelagerte Füllkörper können vermittels ihnen zugeordnete Spindelmuttern durchgreifender Schraubspindeln verstellbar sein. Eine leichte Verstellbarkeit auch während des Betriebes ergibt sich, wenn zwischen den Dicht- und den Füllkörpern eine hydraulische, mit Zuführungskanälen versehene Kammer gebildet ist. Die Rückführung der Füllkörper kann hierbei durch vorzugsweise auf ihre Stirnfläche wirkende, diese vorspannende Druckfedern bewirkt werden, wenn nicht bereits der Druck des Übertragungsmediums ein Rückstellen erlaubt oder das Rückstellen durch Abpumpen der Hydraulikflüssigkeit vorgenommen wird. Als vorteilhaft hat es sich gezeigt, die Dichtungs- und Füllkörper sich mittels zylindrischer Führungs- und/oder Dichtungsflächen einander umgreifen zu lassen.

Im einzelnen sind die Merkmale der Erfindung anhand der folgenden Beschreibung eines Ausführungsbeispieles in Verbindung mit dieses darstellenden Zeichnungen erläutert. Es zeigen hierbei :
Figur 1 einen abgebrochenen Längsschnitt durch eine beheizbare Kalanderwalze, und
Figur 2 einen Querschnitt durch die Kalanderwalze der Fig. 1 unter Berücksichtigung zweier alternativer Weiterbildungen.

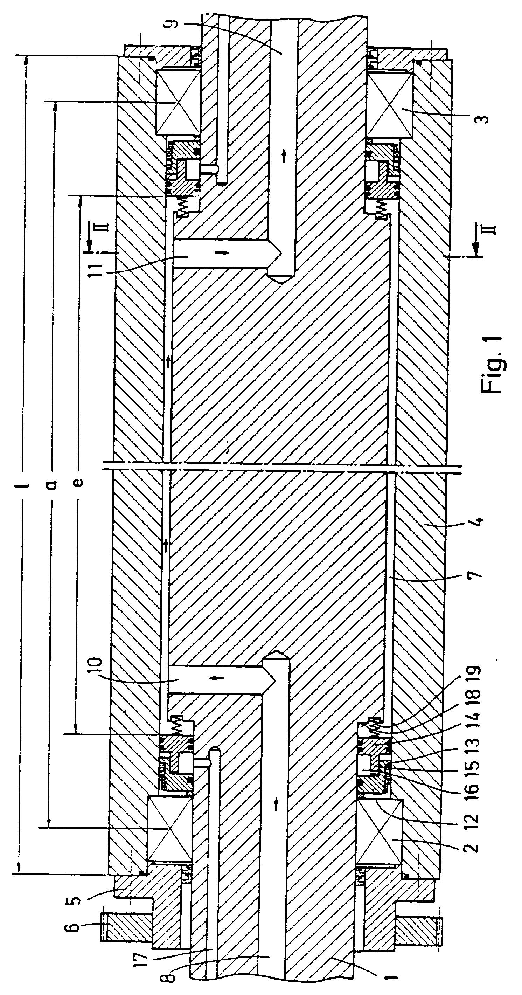

In Fig. 1 ist eine angetriebene beheizbare Kalanderwalze im unterbrochenen vertikalen Längsschnitt dargestellt. Getragen wird die Kalanderwalze von einer stationären Achse 1, deren abgebrochen gezeigte Enden im Betriebe fest eingespannt sein können. Beidendig ist die Achse 1 mit Wälzlagern 2, 3 versehen, welche den als Hohlzylinder ausgebildeten Walzenkörper 4 abstützen. Zum Verspannen der Außenringe ist der Walzenkörper 4 beidseitig mit als Lagerdeckel wirkenden Flanschen verbunden, von denen der Flansch 5 zusätzlich mit einem für den Antrieb vorgesehenen Stimrad 6 verbunden ist Die lichte Weite des Walzenkörpers überschreitet den Durchmesser des Mittelabschnittes der Achse derart, daß zwischen beiden ein Spalt 7 gebildet wird, dessen Stärke bspw. 8 bis 16 mm betragen kann. Die beiden freien Enden der Achse 1 sind jeweils mit einer zentralen Sackbohrung 8 bzw. 9 ausgestattet, in die von der den Spalt 7 einseitig begrenzenden Mantelfläche der Achse 1 ausgehende radiale Querbohrungen 10 bzw. 11 münden. Die freien Enden der Achse 1 sind jeweils über den Sackbohrungen 8 bzw. 9 mit in der Figur nicht dargestellten Zu- bzw. Abflußanschlüssen für das benutzte thermische Übertragungsmedium, bspw. aufgeheizte Öle, ausgestattet, so daß durch Beaufschlagung des Zuflußanschlusses ein Strom des Mediums in Richtung der angegebenen Pfeile bewirkt wird, innerhalb dessen das Medium zunächst die Sackbohrung 8 durchfließt und über die radiale Querbohrung 10 in den Spalt 7 eingeleitet wird, in dem es, den Innenmantel des Walzenkörpers 4 allseitig kontaktierend, in Längsrichtung des Walzenkörpers 4 fließt und durch die radiale Querbohrung 11 sowie die axiale Sackbohrung 9 zum Abflußanschluß abgeführt wird.

Der vom Übertragungsmedium durchströmte Spalt 7 ist gegen die Wälzlager 2 und 3 vermittels von mit Dichtungen ausgestatteten Dichtkörpern 12 abgegrenzt, die mit einem zylinderförmigen Ansatz 13 Ansätze 15 von in axialer Richtung verschlieblichen Füllkörpern 14 umgreifen, die ihrerseits vermittels eingelegter Dichtungen sowohl gegen die Achse 1 als auch gegen den Innenmantel des Walzenkörpers 4 abgedichtet sind. Damit wird zwischen ihnen ein Ringraum 16 gebildet, der durch einen weiteren, als achsparallele Sackbohrung ausgeführten Zuführungskanal 17 in Verbindung mit einer sich quer erstreckenden Anschlußbohrung an eine hydraulische Steuervorrichtung anschließbar ist. Zur Vereinfachung der Steuerung ist die zwischen dem Mittelbereich und den Enden der Achse 1 entstandene Bundfläche 18 mit Ausnehmungen ausgestattet, welche sich gegen die Stirnfläche der Füllkörper abstützende Druckfedem 19 zentrieren. Erreicht wird hiermit, daß der Spatt 7 sich nicht über die Gesamtlänge l des Walzenkörpers 4 erstreckt und auch nicht über eine feste Länge, die aus dieser durch Abziehen der von den Wälzlagern und deren Dichtkörpern in Anspruch genommener Länge entsteht : Durch die axial verschieblichen Füllkörper 14 wird vielmehr die Länge des Spaltes 7 und damit die direkt vom Übertragungsmedium beaufschlagte Beheizungszone des Walzenkörpers 4 variabel gestaltet. Wird z. B. über die Zuführungskanäle 17 zusätzliches Druckmittel in den Ringraum 16 eingeführt, so wird der ihn einseitig begrenzende Füllkörper gegen die Kraft der ihn abstützenden Druckfedem 19 zurückgedrängt und damit die Beheizungszone an dem entsprechenden Ende des Walzenkörpers eingeschränkt. Da beidseitig voneinander unabhängig ansteuerbare Ringräume und damit steuerbare Füllkörper 14 vorgesehen sind, läßt sich die Länge e der Beheizungszone innerhalb der durch die Verschieblichkeit der Füllkörper 14 gegebenen Grenzen beliebig einstellen, wobei auch der voneinander unabhängigen Ansteuerungen wegen asymmetrische Einstellungen der Beheizungszone möglich sind. Bei der Papierherstellung eingesetzte beheizbare Kalander können damit in ihrer Beheizungsbreite der jeweiligen Breite und der Feuchtigkeitsverteilung über diese Breite von Papierbahnen angepaßt werden, so daß die Bahn über ihre wesentliche Breite die gleichen Eigenschaften aufweist und damit ein nur minimaler Randverschnitt erreicht wird.

Als wesentlicher Vorteil zeigt sich jedoch auch, daß durch den Einsatz der feststehenden Achse und die innerhalb der gesamten Länge l des Walzenkörpers 4 untergebrachten Wälzlager sich gleiche Verhältnisse ergeben wie bei üblichen Ausgleichswalzen. Es ergeben sich damit sowohl die gleiche Stützweite der Achse als auch Länge l des Walzenkörpers, und als wesentlich erweist es sich für die in Betracht zu ziehenden Biegungsverhältnisse, daß auch der Abstand a der Lagermittelebenen der beheizbaren Kalanderwalze und der zugeordneten Ausgleichswalze sich in solchen Fällen gleichen. Als wesentlicher Unterschied ist jedoch in Betracht zu ziehen, daß bei den Ausgleichswalzen die zur Aufrechterhaltung der vorgegebenen Linienpressung erforderlichen Kräfte innerhalb des gesamten Walzenkörpers durch Druckmittelbeaufschlagung des zwischen der Achse und dem Walzenkörper gebildeten Spaltes bewirkt wird und die Wälzlager im wesentlichen nur Führungsaufgaben übernehmen, während bei der beheizbaren Kalanderwalze nach der Erfindung der Spalt vom nur unter geringem Druck stehenden Wärmeübertragungsmedium erfüllt ist, so daß die der Linienpressung entsprechenden Kräfte über die Wälzlager abzuführen sind.

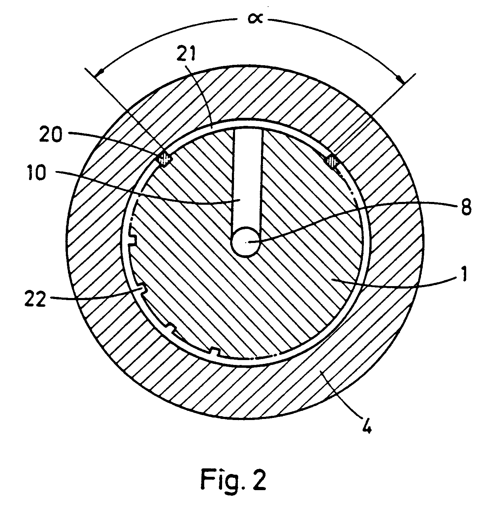

Die Erfindung kann im Bedarfsfalle weitergebildet werden, wie anhand er Fig. 2 erläutert wird. Die Fig. 2 stellt im wesentlichen einen Querschnitt durch die Achse 1 und den Walzenkörper 4 im Bereiche der radialen Querbohrung 10 dar und zeigt die Bohrungen 8 und 10 in Verbindung mit den Konturen der zwischen der Achse 1 und dem Walzenkörper 4 gebildeten Spaltes.

Um den Wärmeübergang intensiver zu gestalten, können innerhalb des Spaltes zusätzliche, eine Verwirbelung bewirkende Mittel vorgesehen sein. So sind gemäß der Fig. 2 axial verlaufende Nute 22 gezeigt, die zur zusätzlichen Verwirbelung des Wärme zuführenden Mediums beitragen und damit den Wärmeübergangskoeffizienten weiter steigern. Zum gleichen Zwecke können auch mit der Achse verschraubte und/oder auch in diese teilweise eingelassene, achsparallel verlaufende Leisten vorgesehen sein. Eine weitere Möglichkeit der Intensivierung des Wärmeüberganges in Verbindung mit einer Beschleunigung des Durchsatzes des Mediums und damit Verringerung der thermischen Trägheit ergibt sich durch Einschränken des gemäß Fig. 1 die gesamte Achse röhrenförmig umfassenden Spaltes 7 auf einen sich nur über einen vorgegebenen Winkel α erstreckenden Segmentspalt 21. Zur Erzielung eines solchen Segmentspaltes wird die Achse 1 mit zwei längs verlaufenden Begrenzungsleisten 20 ausgestattet, die etwa bis zum Innenmantel des Walzenkörpers 4 reichen, welche aber auch als bis zum Innenmantel reichende Dichtleisten ausgebildet sein können, und die ein Austreten des Übertragungsmediums aus dem Sektorspalt 21 einschränken bzw. unterbinden. Unbedeutende Leckverluste können sich im restlichen Spalte ansammeln und aus diesem abgeführt werden. Der vom Segmentspalt umfaßte Sektor kann bspw. dem Papierumschlingungswinkel der Kalanderwalze angepaßt sein und diesem gleichen oder ihn entsprechend über- bzw- unterschreiten. Zweckmäßig sind in diesem Falle die Füllkörper 14 so ausgebildet, daß zumindest ihre den Segmentspalt 21 entsprechend der einstellbaren Länge e begrenzenden Stirnflächen zwischen den Dichtleisten verschieblich sind.

## Patentansprüche

1. Beheizbare Kalanderwalze mit einem hohlzylindrischen Walzenkörper (4) und einem in diesem angeordneten, mit dessen Innenmantel einen ein thermisches Übertragungsmedium führenden Spalt (7) einschließenden Verdrängungskörper, der als durchgehende Achse (1) ausgebildet ist, die in von schwimmenden Walzen bekannter Weise beidseitig gegen den gebildeten Spalt (7) abgedichtete, den Walzenkörper (4) stützende Lager (2, 3) aufweist, und dessen (1) Enden axiale oder achsparallele Sackbohrungen (8, 9) aufweisen, die mit den Zu- und Abflußanschlüssen für das thermische Übertragungsmedium versehen sind, und in deren Endbereiche in im wesentlichen radial geführte Querbohrungen (10, 11) münden,
**dadurch gekennzeichnet,**
daß die Querbohrungen (10, 11) von den einander axial gegenüberliegenden Stirnseiten des Spaltes (7) ausgehen, und daß die diese Stirnseiten des Spaltes abgrenzenden Dichtungen, Dichtkörper (12) einstellbar axial verschieblich sind.

2. Beheizbare Kalanderwalze nach Anspruch 1,
**dadurch gekennzeichnet,**
daß den die Stirnseiten des Spaltes (7) abgrenzenden Dichtungen, Dichtkörper (12) einstellbar axial verschiebliche Füllkörper (14) vorgeordnet sind.

3. Beheizbare Kalanderwalze nach Anspruch 1 oder 2,
**dadurch gekennzeichnet,**
daß die Dichtkörper (12) und/oder Füllkörper (14) vermittels ihnen zugeordnete Spindelmuttern durchgreifender Schraubspindeln verstellbar sind.

4. Beheizbare Kalanderwalze nach einem der Ansprüche 1 bis 3,
**dadurch gekennzeichnet,**
daß zwischen den Dicht- und den Füllkörpern (12, 14) eine hydraulische, mit Zuführungskanälen (Sackbohrung 17) versehene Kammer (Ringraum 16) gebildet ist.

5. Beheizbare Kalanderwalze nach einem der Ansprüche 2 bis 4,
**dadurch gekennzeichnet,**
daß die Füllkörper (14) durch vorzugsweise auf ihre Stirnfläche wirkende Druckfedern (19) vorgespannt sind.

6. Beheizbare Kalanderwalze nach einem der Ansprüche 2 bis 5,
**dadurch gekennzeichnet,**
daß die Dicht- und die Füllkörper (12, 14) mit zylindrischen Führungs- und/oder Dichtungsflächen (13, 15) einander führend umgreifen.

7. Beheizbare Kalanderwalze nach Ansprüche 1 bis 6,
**dadurch gekennzeichnet,**
daß die Achse (1) Längsnute (22) aufweist.

8. Beheizbare Kalanderwalze nach Ansprüchen 1 bis 7,
**dadurch gekennzeichnet,**
daß die Achse (1) mit eingelegten Längsrippen versehen ist.

9. Beheizbare Kalanderwalze nach einem der Ansprüche 1 bis 8,
**dadurch gekennzeichnet,**
daß die Achse (1) mit einen Segmentspalt (21) eingrenzenden, an den Innenmantel des Walzenkörpers (4) anschließenden, längsverlaufenden Begrenzungsleisten (20) oder entsprechenden Dichtungsleisten versehen ist.

## Claims

1. A heatable calender-roll having a hollow cylindrical roll body (4) and a displacement body arranged in the latter to enclose with the inner surface of it a gap (7) to conduct a heat-transfer medium, the said displacement body is made as a shaft (1) passing through, which in the way known from floating rolls exhibits at both ends bearings (2, 3) supporting the roll body (4) and sealed from the gap (7) so formed, the ends of the shaft (1) exhibit blind holes (8, 9) drilled axially or in parallel with the axis, which are provided with inlet and outlet connections for the heat-transfer medium and in their end zones open into transverse holes (10, 11) drilled essentially radially,
**characterized in that**
the transverse holes (10, 11) leave from sides of the gap lying opposite one another axially, and that the seals bounding the endfaces of the gap (7), the sealing bodies (12), are shiftable axially in an adjustable manner.

2. A heatable calender-roll as in Claim 1,
**characterized in that**
filler bodies (14) which are shiftable axially in an adjustable manner are arranged in front of the seals bounding the endfaces of the gap (7) the sealing bodies (12).

3. A heatable calender-roll as in Claim 1 or 2,
**characterized in that**
the sealing bodies (12) and/or filler bodies (14) are adjustable by means of screw spindles which engage through spindle nuts associated with the said bodies.

4. A heatable calender-roll as in one of the Claims 1 to 3,
**characterized in that**
between the sealing bodies (12) and the filler bodies (14) a hydraulic chamber is formed, the annular chamber (16), provided with feed channels.

5. A heatable calender-roll as in one of the Claims 2 to 4,
**characterized in that**
the filler bodies (14) are prestressed by compression springs (19) acting preferably against their endfaces.

6. A heatable calender-roll as in one of the Claims 2 to 5,
**characterized in that**
the sealing bodies (12) and the filler bodies (14) embrace and guide one another by cylindrical guide and/or sealing faces (13, 15).

7. A heatable calender-roll as in one of the Claims 1 to 6,
**characterized in that**
the shaft (1) exhibits longitudinal grooves (22).

8. A heatable calender-roll as in one of the Claims 1 to 7,
**characterized in that**
the shaft (1) is provided with longitudinal ribs inserted in it.

9. A heatable calender-roll as in one of the Claims 1 to 8,
**characterized in that**
the shaft (1) is provided with boundary fillets (20) or corresponding sealing fillets running longitudinally adjacent to the inner surface of the roll body (4) to localize a segmental gap (21).

## Revendications

1. Rouleau de calandre chauffable comportant un corps de rouleau (4) constitué, par un cylindre creux et un corps de déplacement placé dans le cylindre de manière à délimiter, avec la surface intérieure de celui-ci un intervalle (7) assurant le guidage d'un milieu de transmission thermique, en ce que le corps de d'éplacement est un arbre (1) qui traverse le cylindre et qui, d'une manière connue pour les rouleaux flottants, comporte, des deux côtés, des paliers (2, 3) qui assurent l'étanchéité par rapport à l'intervalle (7) et soutiennent le corps des rouleau (4) et en ce que les extrémités de l'arbre (1) comportent des alésages borgnes (8, 9) qui sont ménagés axialement ou parallélement à l'axe de l'arbre, sont munis de raccords d'amenée et d'évacuation du milieu de transmission thermique et débouchent dans des alésages transversaux (10, 11) orientés sensiblement dans le sens radial à leurs extrémités,
caractérisé en ce que
des alérages transversaux (10, 11) partant de côtés diamétralement opposés de l'intervalle, et en ce que les joints (corps d'étanchéité 12) qui délimitent les côtés frontaux de l'intervalle (7) peuvent être déplacés pour un réglage dans le sens axial.

2. Rouleau de calandre chauffable selon la revendication 1
caractérisé en ce que
le dispositif comporte, en avant des joints (corps d'étanchéité 12) qui délimitent les côtés frontaux de l'intervalle (7), des corps de garnissage (14) qui peuvent être déplacés pour un réglage dans le sens axial.

3. Rouleau de calandre chauffable selon une des revendications 1 ou 2,
caractérisé en ce que
les corps d'étanchéité (12) et/ou les corps de garnissage (14) peuvent être déplacés au moyen de broches filetées traversant des écrous filetés correspondants.

4. Rouleau de calandre chauffable selon une des revendications 1 à 3,
caractérisé en ce
qu'il comprend, entre les corps d'étanchéité et les corps de garnissage (12, 14), une chambre hydraulique (espace annulaire 16) comportant des conduits d'amenée.

5. Rouleau de calandre chauffable selon une des revendications 2 à 4,
caractérisé en ce que
les corps de garnissage (14) sont soumis à une précontrainte assurée de préférence par des ressorts de compression (19) agissant sur leur surface frontal.

6. Rouleau de calandre chauffable selon une des revendications 2 à 5,
caractérisé en ce que
les corps d'étanchéité et de garnissage (12, 14) s'engagent les uns dans les autres par des surfaces de guidage et/ou de joints (12, 15) cylindriques.

7. Rouleau de calandre chauffable selon une des revendications 1 à 6,
caractérisé en ce que
l'arbre (1) comporte des rainures longitudinales (22).

8. Rouleau de calandre chauffable selon une des revendications 1 à 7,
caractérisé en ce que
l'arbre (1) comporte des nervures longitudinales.

9. Rouleau de calandre chauffable selon une des revendications 1 à 8,
caractérisé en ce que
l'arbre (1) comporte des bandes des de délimitation (20) ou des bandes d'étanchéité correspondantes qui dèlimitent un intervalle segmenté (21) se raccordent à la surface intérieure du corps de rouleau (4) et sont orientées dans le sens longitudinal.
